(19) Europäisches Patentamt
European Patent Office
Office européen des brevets

(11) **EP 2 164 068 A2**

(12) **EUROPEAN PATENT APPLICATION**

(43) Date of publication:
**17.03.2010 Bulletin 2010/11**

(21) Application number: **09169931.4**

(22) Date of filing: **10.09.2009**

(51) Int Cl.:
*G11B 7/09* (2006.01)    *G11B 7/135* (2006.01)
*G11B 7/085* (2006.01)    *G11B 7/08* (2006.01)
*G11B 7/24* (2006.01)    *G11B 7/00* (2006.01)
*G11B 7/007* (2006.01)

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **10.09.2008 KR 20080089331**

(71) Applicant: **Samsung Electronics Co., Ltd.
Suwon-si, Gyeonggi-do 442-742 (KR)**

(72) Inventors:
• **Kim, In-joo**
  **Gyeonggi-do (KR)**
• **Park, Young-jae**
  **Gyeonggi-do (KR)**
• **Bae, Jae-cheol**
  **Gyeonggi-do (KR)**

(74) Representative: **D'Halleweyn, Nele Veerle Trees
Gertrudis
Arnold & Siedsma
Sweelinckplein 1
2517 GK Den Haag (NL)**

(54) **Method and apparatus for recording and/or reproducing data into and/or from optical disk**

(57)    Provided are a method and apparatus for recording and/or reproducing data into and/or from an optical disk (10). The apparatus includes a reference beam optical system (20) to form a focus of a reference beam (Lb1) in an optical data storage layer (13) of the optical disk (10) and including an objective lens (100); a signal beam optical system (50) to form a focus of a signal beam (Lb2) in the optical data storage layer (13) and also including the objective lens (100); and a servo optical system (70) to project a servo beam (Lr1) onto the optical disk (10), receiving a reflection servo beam (Lr2) which is reflected on the optical disk (10), and performing focusing and tracking control on the objective lens (100). The reference beam optical system (20) includes a first focus mover (32) to move the focus of the reference beam (Lb1), and the signal beam optical system (50) includes a second focus mover (58) to move the focus of the signal beam (Lb2). The data is recorded into a plurality of recording layers in the optical data storage layer (13) by moving a first focus position (Fb), at which the foci of the reference beam (Lb1) and the signal beam (Lb2) are located, in a thickness direction of the optical data storage layer (13), which is a focusing direction.

FIG. 1

**Description**

Aspects of the present invention relate to a method and apparatus for recording and/or reproducing data into and/or from an optical disk, and more particularly, to a method and apparatus for recording and/or reproducing data into and/or from a plurality of recording layers of an optical disk.

Data capacities of optical data storage media (hereinafter referred to as optical disks) are rapidly increasing due to the development of related technologies. The optical disks include, for example, compact disks (CDs), digital versatile disks (DVDs), high-definition DVDs (HD DVDs), and blu-ray disks (BDs).

Also, data storing technologies using holograms are currently a focus of research and attention. In a holographic optical disk, a recording layer is formed of a photosensitive material such as photosensitive inorganic crystals or photopolymers. Data is stored in the photosensitive material as an interference pattern formed by first and second coherent laser beams, such as a reference beam and a signal beam. If a reference beam that is similar to the reference beam used when data is recorded is projected onto the holographic optical disk in which the data is stored as the interference pattern, the signal beam is restored and the data is reproduced.

Such holographic data storing technologies can be divided into a volume holography method in which data is recorded and/or reproduced in pages by using volume holography, and a micro-holography method in which data is recorded and/or reproduced in single bits by using micro-holography. Although large volumes of data can be simultaneously processed, the volume holography method cannot be easily commercialized as data storage devices for general consumers because an optical system has to be very precisely adjusted.

In the micro-holography method, first and second condensed beams interfere with each other at a focus to form a delicate interference pattern (a micro-hologram), the interference pattern is repeatedly recorded on a plane of a data storage medium by moving the interference pattern so as to form a recording layer, and the recording layer is duplicated in a thickness direction of the data storage medium to form a plurality of recording layers, thereby three-dimensionally recording data on a holographic data storage medium.

In other words, the micro-holography method increases capacity of the data storage medium by recording data on multi-layers in the thickness direction of the data storage medium. In typical multi-layer optical disks such as BDs, reflective films physically separate the plurality of the recording layers and an optical focus is formed on a desired recording layer by using a level and polarity of a reflective beam intensity signal.

However, unlike general optical disks, a holographic optical disk does not include reflective films for physically separating the plurality of the recording layers. Thus, the optical focus cannot be easily formed on the desired recording layer of the holographic optical disk and research on a method for recording and/or reproducing data to and/or from the plurality of the recording layers of the holographic optical disk are needed.

The apparatus and method of the present invention is distinguished by the features of claims 1 and 12 respectively.

Aspects of the present invention provide a method and apparatus for recording and/or reproducing data into and/or from a plurality of recording layers of an optical disk.

According to an aspect of the present invention, there is provided an apparatus for recording and/or reproducing data into and/or from an optical disk comprising an optical data storage layer, the apparatus including a reference beam optical system to form a focus of a reference beam in the optical data storage layer and comprising an objective lens; a signal beam optical system to form a focus of a signal beam in the optical data storage layer and also comprising the objective lens; and a servo optical system project a servo beam onto the optical disk, receiving a reflection servo beam which is reflected on the optical disk, and performing focusing and tracking control on the objective lens, wherein the reference beam optical system comprises a first focus mover to move the focus of the reference beam, wherein the signal beam optical system comprises a second focus mover to move the focus of the signal beam, and wherein the data is recorded into a plurality of recording layers in the optical data storage layer by moving a first focus position, at which the foci of the reference beam and the signal beam are located, in a thickness direction of the optical data storage layer, which is a focusing direction.

Reflective films to physically separate the plurality of the recording layers may not be formed in the optical disk, and the optical data storage layer of the optical disk may be formed of a photosensitive material capable of recording holograms.

In response to the first focus position moving to a second focus position in the focusing direction, the first and second focus movers may be driven such that the foci of the reference beam and the signal beam simultaneously move to the second focus position.

In response to the first focus position moving to the second focus position, the first and second focus movers may be driven such that a focus error signal representing a mismatch between the foci of the reference beam and the signal beam is in a linear negative feedback state.

In response to the first focus position moving to the second focus position, a servo operation of the servo optical system may be continuously performed.

According to another aspect of the present invention, there is provided a method of recording and/or reproducing data into and/or from an optical disk comprising an optical data storage layer, the method including forming foci of a reference beam and a signal beam in the optical data storage layer; moving the foci of the reference beam and the signal beam so as to be located at a first focus position, and recording data into a plurality of recording layers in the optical data storage layer by moving the first focus position in a thickness direction of the optical data storage layer, which is a focusing direction.

In response to the first focus position moving to a second focus position in the focusing direction, the foci of the reference beam and the signal beam may simultaneously move to the second focus position.

In response to the first focus position moving to the second focus position in the focusing direction, the foci of the reference beam and the signal beam may move such that a focus error signal representing a mismatch between the foci of the reference beam and the signal beam is in a linear negative feedback state.

In response to the first focus position moving to the second focus position in the focusing direction, a servo driving operation may be continuously performed on an objective lens for forming the foci of the reference beam and the signal beam, with regard to the optical disk.

Additional aspects and/or advantages of the invention will be set forth in part in the description which follows and, in part, will be obvious from the description, or may be learned by practice of the invention.

BRIEF DESCRIPTION OF THE DRAWINGS

These and/or other aspects and advantages of the invention will become apparent and more readily appreciated from the following description of the embodiments, taken in conjunction with the accompanying drawings of which:

FIG. 1 is a schematic structural diagram of a holographic optical disk, according to an embodiment of the present invention;

FIG. 2 is a schematic image of a hologram that is formed in an optical data storage layer of the optical disk illustrated in FIG. 1 as a recording mark due to interference between reference and signal beams, according to an embodiment of the present invention;

FIG. 3 is a schematic diagram for describing a method of recording data into a plurality of recording layers, according to an embodiment of the present invention;

FIG. 4 is a schematic diagram of a data recording and/or reproducing apparatus according to an embodiment of the present invention;

FIG. 5 is a schematic diagram showing a proceeding path of a servo beam in a servo optical system of the data recording and/or reproducing apparatus illustrated in FIG. 4;

FIG. 6 is a schematic diagram showing a proceeding path of a signal beam in a recording mode of the data recording and/or reproducing apparatus illustrated in FIG. 4; and

FIG. 7 is a schematic diagram showing a proceeding path of a reference beam in recording and reproduction modes of the data recording and/or reproducing apparatus illustrated in FIG. 4.

DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

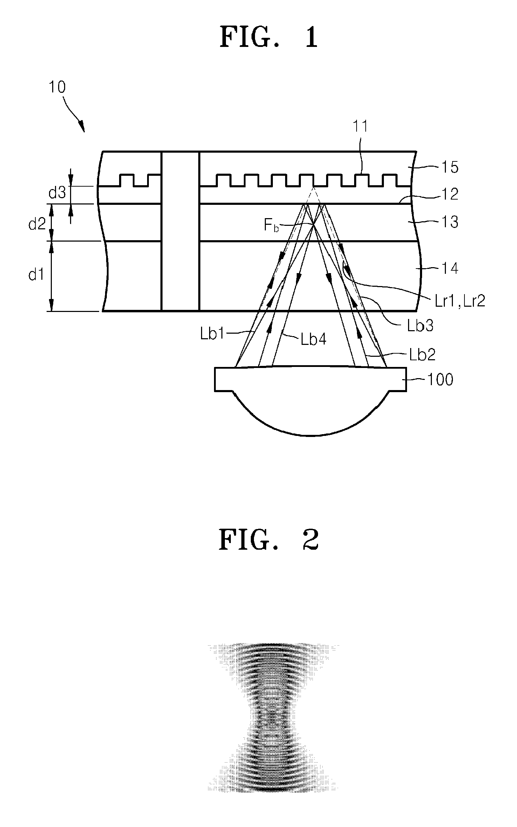

FIG. 1 is a schematic structural diagram of an optical disk 10 that is a holographic optical disk, according to an embodiment of the present invention. FIG. 2 is a schematic image of a hologram that is formed in an optical data storage layer 13 of the optical disk 10 illustrated in FIG. 1 as a recording mark due to interference between reference and signal beams, according to an embodiment of the present invention.

Referring to FIG. 1, the optical disk 10 includes substrates 14 and 15, a reflective film 11 for reflecting a first beam having a first wavelength, a transflective film 12 for transmitting the first beam and reflecting a second beam having a second wavelength which is different from that of the first beam, and the optical data storage layer 13 in which optical data is stored. The first beam may be a red beam that is a servo beam and the second beam may be a blue beam. In the optical data storage layer 13, data may be recorded onto a plurality of recording layers. However, reflective films for physically separating the plurality of the recording layers are not formed. For example, the optical data storage layer 13 may be formed of a photosensitive material capable of recording holograms. In FIG. 1, Lr1 indicates a servo beam Lr1 which is incident on the reflective film 11 and Lr2 indicates a servo beam which is reflected from the reflective film 11. Lb1 indicates a reference beam which is focused on a first focus position Fb and Lb3 indicates a reference beam which is diverged from the first focus position Fb and reflected from the transflective film 12. Lb2 indicates a signal beam which is focused on the first focus position Fb after reflected from the transflective film 12 and Lb4 indicates a signal beam which is diverged from the first focus position Fb. Like compact disks (CDs), digital versatile disks (DVDs), and blu-ray disks (BDs), the optical disk 10 has, for example, a diameter of about 120 mm and a hole in its center. The substrates 14 and 15 may be formed on both sides of the optical disk 10, which is a holographic data storage medium, in order to protect the optical data storage layer 13 and the reflective film 11. The substrates 14 and 15 may be formed of a material such as polycarbonate or glass.

The optical data storage layer 13 may be formed of a material such as photopolymers having a refractive index that varies according to the intensity of a projected beam. For example, the optical data storage layer 13 may be formed so as to react to a blue beam having a wavelength of about 405 nm. If the reference beam Lb1 and the signal beam Lb2 are blue beams that interfere in the optical data storage layer 13, the hologram illustrated in FIG. 2 is formed as a recording mark and may be a micro-hologram. The substrates 14 and 15 may be formed so as to both have the same refractive index as the optical data storage layer 13.

A thickness d2 of the optical data storage layer 13 is designed to be sufficiently larger than the height of a recording mark. For example, the thickness d2 of the optical data storage layer 13 may be about 150 $\mu$m. In FIG. 1, a thickness d1 of the substrate 14 is measured from a bottom surface of the substrate 14 to a bottom surface to the optical data storage layer 13 and a thickness d3 of the transflective film 12 measured is from the transflective film 12 to the reflective film 11.

If a recording layer is formed in the optical data storage layer 13 as the hologram is recorded due to interference between the reference beam Lb1 and the signal beam Lb2, and holograms are formed in the optical data storage layer 13 in a thickness direction of the optical data storage layer 13 by changing positions of recording, the data may be recorded into the plurality of recording layers.

Lands, grooves, or pits may be formed on the reflective film 11 so as to implement tracking and focusing servos. The first beam such as the servo beam Lr1 that is a red beam, which is incident from a side of the substrate 14, is reflected on the reflective film 11 toward the side of the substrate 14.

The transflective film 12 is a wavelength-selective reflective film for transmitting a servo beam (red beam) and reflecting the second beam such as a blue beam. The transflective film 12 may be formed of a cholesteric liquid crystal layer so as to have a circularly polarized beam separating function. A cholesteric liquid crystal layer has selective reflection characteristics and reflects only circularly polarized components if a rotation direction (clockwise or counterclockwise direction) of spirals of crystals is identical to a direction of circular polarization and a wavelength of the circularly polarized beam corresponds to a pitch of the spirals.

The signal beam Lb2 is reflected on the transflective film 12 and then is focused at the first focus position Fb, and the reference beam Lb1 is directly focused at the first focus position Fb. In this case, when the reference beam Lb1 and the signal beam Lb2 are incident on the optical disk 10, the signal beam Lb2 may be clockwise circularly polarized and the reference beam Lb1 may be counterclockwise circularly polarized. Considering this, the transflective film 12 may be formed so as to reflect the signal beam Lb2 that is a clockwise circularly polarized blue beam and to transmit the reference beam Lb1 that is a counterclockwise circularly polarized blue beam, and is orthogonal to the signal beam Lb2.

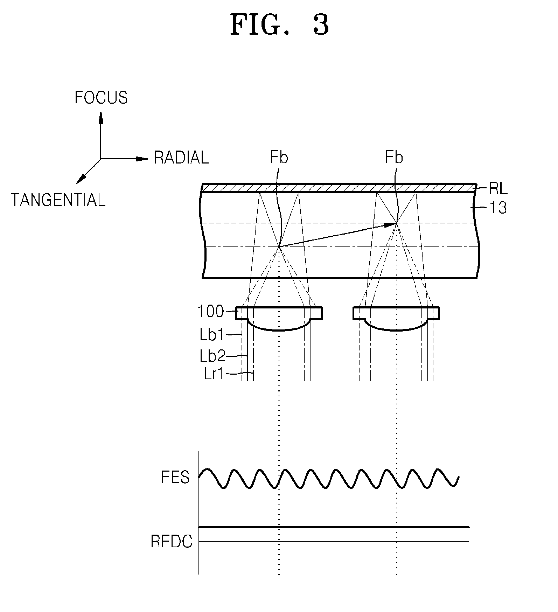

FIG. 3 is a schematic diagram for describing a method of recording data into a plurality of recording layers, according to an embodiment of the present invention.

FIG. 3 shows a case that a signal beam Lb2 and a reference beam Lb1 form foci in order to record data into the optical data storage layer 13 of the optical disk 10 illustrated in FIG. 1. A reflective layer RL simply represents a configuration including the reflective film 11 and the transflective film 12 illustrated in FIG. 1. A focus direction is a thickness direction of the optical data storage layer 13, a radial direction is a tracking direction crossing tracks of an optical disk. A tangential direction is a circumferential direction following the tracks of the optical disk.

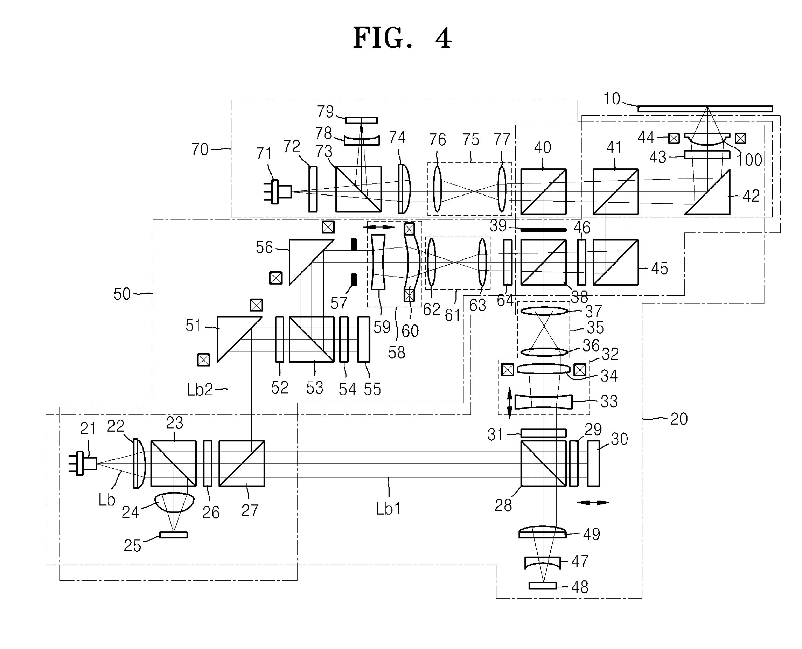

As described above with reference to FIG. 1, the data is recorded according to the shape of an interference pattern of the reference beam Lb1 and the signal beam Lb2. In this case, the data is recorded at a first focus position Fb at which the foci of the reference beam Lb1 and the signal beam Lb2 are located. Each of the reference beam Lb1 and the signal beam Lb2 form a focus in the optical data storage layer 13 through a predetermined optical system including an objective lens 100, and the foci of the reference beam Lb1 and the signal beam Lb2 may move along the thickness direction of the optical data storage layer 13, that is, Lb1 and Lb2 may move along the focus direction. Also, a servo beam Lr1 is incident on the optical disk 10 in order to facilitate servo control of the objective lens 100 with regard to the optical disk 10. Optical systems for forming the reference beam Lb1, the signal beam Lb2, and the servo beam Lr1 will be described in detail later with reference to FIGS. 4 through 7.

In order to record the data into the plurality of the recording layers of the optical data storage layer 13, the first focus position Fb at which the foci of the reference beam Lb1 and the signal beam Lb2 are located has to move in the focus direction. For this, the focus of the reference beam Lb1 moves in the focus direction and the focus of the signal beam Lb2 also moves in the focus direction. In FIG. 3, the first focus position Fb moves to a second focus position Fb'. According to the current embodiment of the present invention, when the first focus position Fb moves to the second focus position Fb', the foci of the reference beam Lb1 and the signal beam Lb2 simultaneously move to the second focus position Fb' in order to stably and rapidly change recording layers when the data is recorded. For example, if the focus of the reference beam Lb1 moves to the second focus position Fb' and then the focus of the signal beam Lb2 moves to the second focus position Fb', servo-driving of the objective lens 100 with regard to the optical disk 10 has to be turned off after the focus of the reference beam Lb1 moves to the second focus position Fb' and servo-driving has to be turned on again after the focus of the signal beam Lb2 moves to the second focus position Fb'. In this case, operational stability of the optical disk 10 may be reduced when recording layers are changed.

According to the current embodiment of the present invention, if the foci of the reference beam Lb1 and the signal beam Lb2 simultaneously move to the second focus position Fb', the servo-driving may be continuously maintained during movement. Here, 'simultaneously' does not refer to a time at which the focus of the reference beam Lb1 is at the first focus position Fb is completely identical to a time at which the focus of the signal beam Lb2 is at the first focus position Fb. Additionally, here, 'simultaneously' does not refer to the time at which the focus of the reference beam Lb1 is at the second focus position Fb' is completely identical to a time at which the focus of the signal beam Lb2 is at the second focus point Fb'. As used here, 'simultaneously' refers to the moving of the focus of the reference beam Lb1 and the moving of the focus of the signal beam Lb2 are performed together, instead of being performed one after another. When the first focus position Fb moves to the second focus position Fb', a mismatch between the foci of the reference beam Lb1 and the signal beam Lb2 can be represented as a focus error signal. In order to move the first focus position Fb to the second focus position Fb' without turning off a servo, the focus error signal needs to be kept in a linear negative feedback state, which can be checked by using a Radio Frequency Direct Current (RFDC) signal representing an Radio Frequency (RF) sum signal level.

When recording layers are changed as described above, data recording and reproducing may be stably performed in an optical disk not including reflective films for physically separating the plurality of the recording layers, for example, a holographic optical disk for recording data using holograms.

FIG. 4 is a schematic diagram of a data recording and/or reproducing apparatus according to an embodiment of the present invention. The data recording and/or reproducing apparatus may perform the method described above with reference to FIG. 3.

Referring to FIG. 4, the data recording and/or reproducing apparatus according to the current embodiment of the present invention includes a servo optical system 70 for forming a path of a servo beam Lr1 in order to servo-drive the objective lens 100 that condenses data recording and/or reproducing beams on the optical disk 10; a signal beam optical system 50 for forming a focus of a signal beam Lb2 in the optical data storage layer 13 of the optical disk 10; and a reference beam optical system 20 for forming a focus of a reference beam Lb1 in the optical data storage layer 13 of the optical disk 10. The reference beam optical system 20 and the signal beam optical system 50 form a recording and/or reproducing optical system. According to the current embodiment of the present invention, the reference beam optical system 20 and the signal beam optical system 50 respectively include focus movers (not shown) for moving the foci of the signal beam Lb2 and reference beam Lb1 in the optical data storage layer 13.

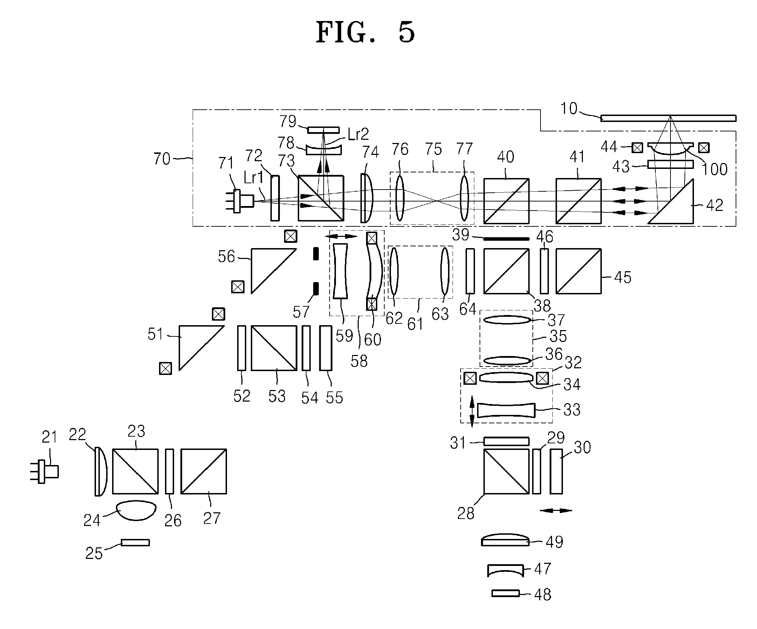

The servo optical system 70, the signal beam optical system 50, and the reference beam optical system 20 will now be described in detail with reference to FIGS. 5 through 7 in conjunction with FIG. 4.

FIG. 5 is a schematic diagram showing a proceeding path of the servo beam Lr1 in the servo optical system 70 of the data recording and/or reproducing apparatus illustrated in FIG. 4.

Referring to FIG. 5, a first light source 71 of the servo optical system 70 may project a first beam having a first wavelength, which is the servo beam Lr1 having a red wavelength, onto the optical disk 10, and receive a reflection servo beam Lr2 that is reflected on a reflective film 11.

The first light source 71 may project the servo beam Lr1 having a wavelength of, for example, about 660 nm. The servo beam Lr1 that is projected from the first light source 71 is divided into one main beam and first and second sub beams through a grating 72. The main beam and the sub beams are transmitted through a polarized beam splitter 73 and are incident on a collimating lens 74.

The grating 72 may divide the main beam and the sub beams such that an intensity of the main beam is greater than or equal to the intensity of the sub beams. In FIG. 5, the sub beams are not illustrated. The polarized beam splitter 73 may transmit a P-polarized component of the servo beam Lr1 and reflect an S-polarized component of the servo beam Lr1. The collimating lens 74 may convert the servo beam Lr1 that is projected from the first light source 71 into a parallel beam. The servo beam Lr1 converted into a parallel beam is incident on a compensation lens 75. The compensation lens 75 may be formed of first and second condensing lenses 76 and 77. The servo beam Lr1 transmitted through the compensation lens 75 is transmitted through dichroic prisms 40 and 41, reflected on a mirror 42, incident on a quarter wave plate (QWP) 43, converted into a circularly polarized beam, and is incident on the objective lens 100. As described above with reference to FIG. 1, the objective lens 100 condenses the servo beam Lr1 on the reflective film 11 so as to form a focus on the reflective film 11, and the reflection servo beam Lr2 is reflected on the reflective film 11 so as to proceed in a direction opposite to the direction of the servo beam Lr1.

The objective lens 100 is designed optimally for a second beam having a second wavelength, which is a blue beam for recording and/or reproducing holograms and projected from a second light source 21. With regard to the servo beam Lr1, the objective lens 100 is optimized to focus the servo beam Lr1, which is the first beam, in consideration of a correlation, such as an optical distance, between the compensation lens 75 and the objective lens 100, and may function as, for example, a condensing lens having a numerical aperture of about 0.63.

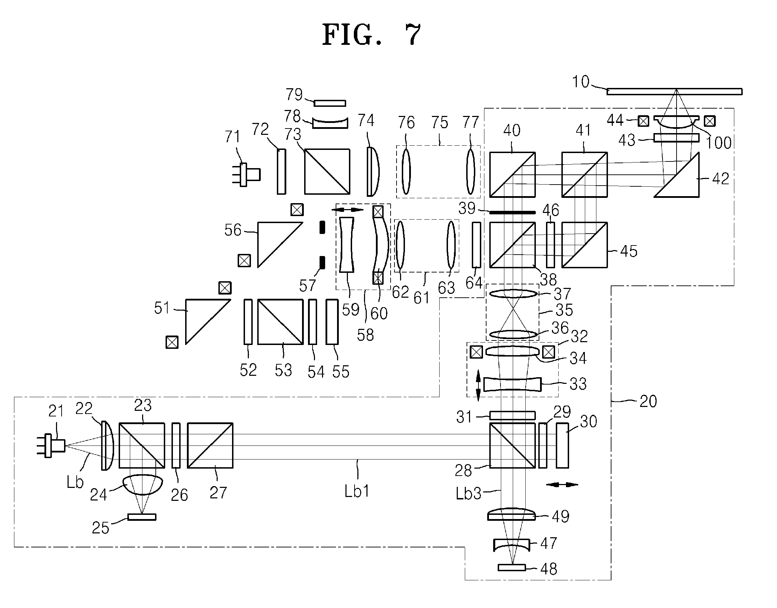

The dichroic prism 40 may transmit almost 100% of a red beam (servo beam) and reflect almost 100% of a blue beam (recording and/or reproducing beam, or a reference beam, as shown in FIG. 7). The dichroic prism 41 may transmit almost 100% of the red beam, transmit almost 100% of a P-polarized component of the blue beam, and reflect almost 100% of an S-polarized component of the blue beam. The mirror 42 may reflect almost 100% of the red and blue beams and the QWP 43 may convert linearly polarized beams of the red and blue beams into circularly polarized beams.

The reflection servo beam Lr2 is transmitted through all of the objective lens 100, the QWP 43, the mirror 42, the dichroic prisms 40 and 41, and the compensation lens 75 one by one so as to be converted into a parallel beam Then, the reflection servo beam Lr2 is condensed through the collimating lens 74, reflected on the polarized beam splitter 73, and is received by a first photodetector 79. An astigmatism lens such as a cylindrical lens 78 may further be included between the polarized beam splitter 73 and the first photodetector 79 in order to generate astigmatism to the reflection servo beam Lr2 and to implement a focus servo by using an astigmatic method.

The optical disk 10 can have bias and eccentricity and, and consequently a target track and a corresponding focus position of the optical disk 10 can be changed. Accordingly, the servo optical system 70 needs to locate a focus of the servo beam Lr1 on the target track at the corresponding focus position. For this, the servo beam Lr1 needs to move in a focus direction that is a thickness direction of the optical disk 10, and a tracking direction that is a radial direction of the optical disk 10.

In order to move the servo beam Lr1 in the focus direction and the tracking direction, an actuator 44 may be formed as a 2-axis actuator so as to drive the objective lens 100 on first and second axes in the focus direction and the tracking direction. Also, the actuator 44 may be formed of a 3-axis actuator so as to drive the objective lens 100 to control tilt in radial direction as well as focusing and tracking.

The servo beam Lr1 is condensed on the reflective film 11 through the objective lens 100 and the reflection servo beam Lr2 is received by the first photodetector 79. The reflection servo beam Lr2 that is received by the first photodetector 79 reflects focusing and tracking states.

Although not shown, the first photodetector 79 may be formed of a main photodetector including four beam reception areas Ar, Br, Cr, and Dr so as to receive the main beam, and first and second sub photodetectors respectively including two beam reception areas Er and Fr, and Hr and Gr which are disposed at both sides of the main photodetector in a radial direction so as to receive the sub beams, in order to detect a focus error signal and a tracking error signal.

Focusing control may be performed by using an astigmatic method and a signal detected by the main photodetector. A focus error signal (FESr) that uses a detection signal of the main beam received by the main photodetector is calculated using Equation 1, wherein Ar, Br, Cr, and Dr are the four beam reception areas noted above, and the FESr is input to a controller (not shown) so as to be used for focusing control for the objective lens 100. Hereinafter, the beam reception areas of a photodetector and a signal detected from the beam reception areas are indicated with the same mark.

$$FESr = (Ar+Cr)-(Br+Dr) \dots\dots\dots\dots\dots\dots\dots\dots\dots (1)$$

Tracking control may be performed by using a differential push-pull (DPP) method and signals detected by the sub photodetectors. A tracking error signal DPPr using the DPP method represents a mismatch of the servo beam Lr1 from the target track and may be calculated using Equation 2. In Equation 2, k is a gain.

$$MPPr = (Ar+Dr)-(Br+Cr)$$

$$SPPr1 = Er-Fr$$

$$SPPr2 = G1-Hr$$

$$DPPr = MPPr-k(SPPr1+SPPr2) \dots\dots\dots\dots\dots\dots\dots\dots\dots (2)$$

As described above, the servo optical system 70 that uses the servo beam Lr1 projects the servo beam Lr1 onto the reflective film 11 of the optical disk 10, which is a holographic data storage medium, and performs the focusing and tracking control of the objective lens 100 by using the reflection servo beam Lr2 that is reflected on the reflective film 11.

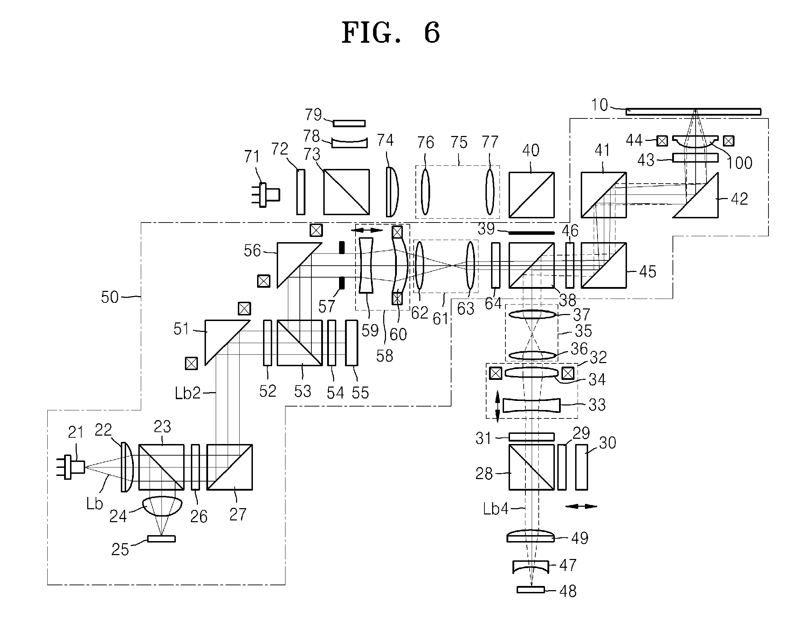

FIG. 6 is a schematic diagram showing a proceeding path of the signal beam Lb2 in a recording mode of the data recording and/or reproducing apparatus illustrated in FIG. 4. FIG. 7 is a schematic diagram showing a proceeding path of the reference beam Lb1 in recording and reproduction modes of the data recording and/or reproducing apparatus illustrated in FIG. 4.

Referring to FIGS. 6 and 7, a second light source 21 may project a second beam having a second wavelength, such as a blue beam Lb having a wavelength of about 405 nm. The blue beam Lb is incident on a collimating lens 22 and is converted into a parallel beam.

The blue beam Lb that is converted into a parallel beam is transmitted through an active half wave plate (HWP) 26 and is reflected on or transmitted through a polarized beam splitter 27. In this exemplary description, the blue beam reflected on the polarized beam splitter 27 is used as the signal beam Lb2 and a blue beam transmitted through the polarized beam splitter 27 is used as the reference beam Lb1.

As an on-off type HWP, the active HWP 26 may function as an HWP when electricity is applied and may not function as an HWP when electricity is not applied. Thus, if electricity is applied to the active HWP 26 so as to function as an HWP, the blue beam Lb has a polarization direction that is rotated by a predetermined angle due to the active HWP 26. Accordingly, the signal beam Lb2, which is an S-polarized component, is reflected on the polarized beam splitter 27 and the reference beam Lb1, which is a P-polarized component, is transmitted through the polarized beam splitter 27. In this exemplary description, electricity is not applied to the active HWP 26 in the reproduction mode and the active HWP 26 does not function as an HWP. Accordingly, all or most of the P-polarized components of the blue beam Lb that is projected from the second light source 21 are transmitted through the polarized beam splitter 27 and proceed along the proceeding path of the reference beam Lb1 in the recording mode. In this exemplary description, it is assumed that the blue beam Lb projected from the second light source 21 is in a P-polarized state.

According to another embodiment of the present invention, the active HWP 26 may be formed of an HWP and a rotation driving device that is formed on the HWP. Thus, a polarization direction may be changed according to a rotation angle so as to control an intensity distribution of S-polarized and P-polarized beams.

The blue beam Lb that is projected from the second light source 21 is divided to be approximately 50% of the reference beam Lb1 and approximately 50% of the signal beam Lb2 through the polarized beam splitter 27. A division ratio may be controlled by the active HWP 26.

The signal beam Lb2 that is an S-polarized beam is reflected on a Galvano mirror 51, converted into a P-polarized beam through an HWP 52, transmitted through a polarized beam splitter 53, converted into a circularly polarized beam through a QWP 54, and re-reflected on a mirror 55. The signal beam Lb2 that is re-reflected on the mirror 55 is converted into an S-polarized beam through the QWP 54, reflected on the polarized beam splitter 53, and is incident on a Galvano mirror 56.

The Galvano mirrors 51 and 56 may change angles of a reflection beam by adjusting a proceeding direction of the signal beam Lb2 through a controller (not shown).

The signal beam Lb2 reflected on the Galvano mirror 56 is transmitted through a slit 57 and is incident on a beam expander 58. The beam expander 58 may be formed of first and second movable lenses 59 and 60. The signal beam Lb2 that diverges through the movable lens 59 is converted into a condensed beam through the movable lens 60, transmitted through a relay lens 61, incident on an HWP 64, and converted into a P-polarized beam.

Here, the beam expander 58 functions as a focus mover that moves a focus of the signal beam Lb2 in a thickness direction of the optical data storage layer 13 of the optical disk 10. The beam expander 58 is formed of the first and second movable lenses 59 and 60. The movable lens 59 moves along an optical axis by using a stepping motor or a piezo motor, and the movable lens 60 moves along the optical axis by using an actuator similar to an actuator 44 for an objective lens 100. The movable lens 59 performs coarse focus adjustment and the movable lens 60 performs relatively fine focus adjustment in comparison to the movable lens 59. In more detail, the movable lens 59 moves the focus of the signal beam Lb2 near to a target depth of the optical disk 10 and then, the movable lens 60 moves the focus of the signal beam Lb2 to an exact position. A moving distance of the movable lens 59 may be greater than the moving distance of the movable lens 60.

The relay lens 61 guarantees a distance between the objective lens 100 and the movable lens 60 of the beam expander 58, and may be formed of first and second convex lenses 62 and 63.

The signal beam Lb2, which is a P-polarized beam and is transmitted through the HWP 64, is transmitted through a polarized beam splitter 38, and is incident on an active HWP 46. Then, the active HWP 46 that is driven to convert polarization (for example, to which electricity is applied) rotates a polarization direction of the signal beam Lb2 by a predetermined angle and thus the signal beam Lb2 is converted to include an S-polarized component. The signal beam Lb2 that is a P-polarized beam may be converted to include about 70% of S-polarized components and about 30% of P-polarized components through the active HWP 46.

The signal beam Lb2 reflects on a mirror 45, only the S-polarized components of the signal beam Lb2 are incident on the mirror 42 through the dichroic prism 41, and the signal beam Lb2 is converted into, for example, a clockwise circularly polarized beam through the QWP 43 so as to be incident on the objective lens 100. The signal beam Lb2 is condensed through the objective lens 100, and is reflected on the transflective film 12, as illustrated in FIG. 1, which includes a cholesteric liquid crystal layer, so as to form a focus at a first focus position Fb that is a position of a focus of the reference beam Lb1.

The objective lens 100 condenses the signal beam Lb2 and may function as, for example, a condensing lens having a numerical aperture of about 0.4 in consideration of a correlation, such as an optical distance, with the beam expander 58.

The signal beam Lb2 that is condensed on the first focus position Fb diverges and a reflection signal beam Lb4 is re-incident on the objective lens 100. The reflection signal beam Lb4 is reflected on the transflective film 12 including a cholesteric liquid crystal layer, and has a clockwise circularly polarized beam as in the signal beam Lb2. The reflection signal beam Lb4 is converted into an S-polarized beam through the QWP 43, reflected on the mirror 42, the dichroic prism 41, and the mirror 45, and incident on the active HWP 46. The reflection signal beam Lb4 that is an S-polarized beam is converted to include, for example, about 30% of S-polarized components and about 70% of P-polarized components through the active HWP 46, and the S-polarized components of the reflection signal beam Lb4 are reflected on the polarized beam splitter 38. The reflection signal beam Lb4, which includes the S-polarized components and is reflected on the polarized beam splitter 38, is transmitted through a relay lens 35 and is incident on a beam expander 32. The reflection signal beam Lb4 is converted into a P-polarized beam through an HWP 31, transmitted through a polarized beam splitter 28, condensed through a condensing lens 49, has astigmatism generated through a cylindrical lens 47, and received by a second photodetector 48.

The optical disk 10 can have bias and eccentricity and thus a target track and a corresponding focus position can be changed. Accordingly, as described above with reference to FIG. 5, focusing and tracking control is performed by an optical system using a servo beam that is a red beam, and the controller (not shown). However, due to movement of the objective lens 100, a mismatch can occur on the focus of the signal beam Lb2 with regard to the first focus position Fb that is the position of the focus of the reference beam Lb1. Accordingly, the signal beam optical system 50 adjusts optical positions of various optical elements in consideration of a state wherein the reflection signal beam Lb4 is received by the second photodetector 48 according to a degree of mismatch of the focus of the signal beam Lb2 with regard to the focus of the reference beam Lb1, which is located in the optical data storage layer 13 of the optical disk 10, as illustrated in FIG. 1.

In the recording mode, in order to perform the focusing and tracking control with regard to the signal beam Lb2, the second photodetector 48 may include four beam reception areas Ab, Bb, Cb, and Db to detect the reflection signal beam Lb4. A signal processor (not shown) performs the focusing control by using an astigmatic method, and calculates a focus error signal FESb from signals detected from the four beam reception areas Ab, Bb, Cb, and Db by using Equation 3 in order to provide the focus error signal FESb to the controller.

$$FESb = (Ab+Cb)-(Bb+Db) \ldots\ldots\ldots\ldots\ldots\ldots\ldots (3)$$

The focus error signal FESb represents a difference between the foci of the reference beam Lb1 and the signal beam Lb2 with regard to a focus direction.

The tracking control is performed by using a push-pull signal. A tracking error signal RPPb is calculated using Equation 4 so as to be provided to the controller.

$$RPPb = (Ab+Db)-(Bb+Cb) \ldots\ldots\ldots\ldots\ldots\ldots\ldots (4)$$

The tracking error signal RPPb represents a difference between the foci of the reference beam Lb1 and the signal beam Lb2 with regard to a tracking direction.

Meanwhile, a tangential error signal TPPb that is required to perform tangential control may be calculated using Equation 5. The tangential control is for matching the signal beam Lb2 to the focus of the reference beam Lb1 with regard to a tangential direction of the optical disk 10.

$$TPPb = (Ab+Bb)-(Cb+Db) \ldots\ldots\ldots\ldots\ldots\ldots\ldots (5)$$

The tangential error signal TPPb represents a difference between the foci of the reference beam Lb1 and the signal beam Lb2 with regard to the tangential direction of the optical disk 10.

The controller may generate a focus driving signal based on the focus error signal FESb, and provide the focus driving signal to the movable lens 60 of the beam expander 58 to perform focusing control on the movable lens 60 in order to reduce the difference between the foci of the reference beam Lb1 and the signal beam Lb2 with regard to the focus direction. Also, the controller may generate a tracking driving signal based on the tracking error signal RPPb, and provide the tracking driving signal to the Galvano mirror 56 to perform tracking control on the Galvano mirror 56 in order to reduce the difference between the foci of the reference beam Lb1 and the signal beam Lb2 with regard to the tracking direction.

Furthermore, the controller may generate a tangential driving signal based on the tangential error signal TPPb, and provide the tangential driving signal to the Galvano mirror 51 to perform tangential control on the Galvano mirror 51 in order to reduce the difference between the foci of the reference beam Lb1 and the signal beam Lb2 with regard to the tangential direction.

Thus, the signal beam optical system 50 projects the signal beam Lb2 onto the optical disk 10, which is a holographic data storage medium, receives the reflection signal beam Lb4 that is reflected on the transflective film 12 of the optical disk 10, and provides a beam reception result to the signal processor. The controller may perform focusing control on the movable lens 60 and the beam expander 58, and tangential and tracking control on the Galvano mirrors 51 and 56, to form the focus of the signal beam Lb2 on the focus of the reference beam Lb1.

Meanwhile, referring to FIG. 7, in the reference beam optical system 20, the blue beam Lb that is projected from the second light source 21 is converted into a parallel beam through the collimating lens 22 and includes S-polarized and P-polarized components through the active HWP 26. The S-polarized components of the blue beam Lb are reflected on the polarized beam splitter 27 so as to be used as the signal beam Lb2, as described above.

The P-polarized components of the blue beam Lb may be transmitted through the polarized beam splitter 27 so as to be used as the reference beam Lb1. The reference beam Lb1 that is transmitted through the polarized beam splitter 27 is incident on the polarized beam splitter 28. The reference beam Lb1, which is a P-polarized beam transmitted through the polarized beam splitter 28, is converted into a counterclockwise circularly polarized beam through a QWP 29, reflected on a mirror 30, re-converted into an S-polarized beam through the QWP 29, reflected on the polarized beam splitter 28, and proceeds to the HWP 31. The reference beam Lb1 that is an S-polarized beam is converted into a P-polarized beam through the HWP 31 and is incident on the beam expander 32.

Here, the mirror 30 is movable and optical path lengths of the reference beam Lb1 and the signal beam Lb2 may be matched by moving the optical path length of the reference beam Lb1 by moving the mirror 30. In order to match the optical path lengths of the reference beam Lb1 and the signal beam Lb2, only the signal beam optical system 50 may drive the mirror 55 or both the reference beam optical system 20 and the signal beam optical system 50 may respectively drive the mirror 55 and the mirror 30. If a laser diode is used as the second light source 21, since the laser diode has a coherence distance of about several hundred microns, if a difference between the optical path lengths of the reference beam Lb1 and the signal beam Lb2 is greater than the coherence distance, a recording mark (hologram) to be formed on foci of the reference beam Lb1 and the signal beam Lb2 may not be appropriately formed. It is advantageous for the difference between the optical path lengths of the reference beam Lb1 and the signal beam Lb2 to be controlled to be less than the coherence distance by adjusting, for example, the mirror 30 in order to appropriately form the hologram.

The reference beam Lb1, which is a P-polarized beam and is incident on the beam expander 32, diverges through a movable lens 33 and is re-converged through a movable lens 34. The reference beam Lb1 that is transmitted through the beam expander 32 is transmitted through the relay lens 35 and is incident on a polarized beam splitter 36. Since the reference beam Lb1 is a P-polarized beam, as described above, the reference beam Lb1 is transmitted through the polarized beam splitter 36 and is incident on a shutter 39. Here, the beam expander 32 and the relay lens 35 are respectively identical to the beam expander 58 and the relay lens 61 of the signal beam optical system 50. Also, the beam expander 32 functions as a focus mover that moves the reference beam Lb1 in a thickness direction of the optical data storage layer 13 of the optical disk 10. The beam expander 32 is formed of the first and second movable lenses 33 and 34 that move along an optical axis. The movable lens 33 performs coarse focus adjustment and the movable lens 34 performs fine focus adjustment.

The controller controls the shutter 39 to block or transmit the reference beam Lb1. If the reference beam Lb1 is transmitted through the shutter 39, the reference beam Lb1 is a P-polarized beam, reflected on the dichroic prism 40, transmitted through the dichroic prism 41, and is incident on the mirror 42. The reference beam Lb1 is then reflected on the mirror 42, converted into a counterclockwise circularly polarized beam through the QWP 43, and is condensed on the optical disk 10 through the objective lens 100.

The objective lens 100 that condenses the reference beam Lb1 may function as a condensing lens having a numerical aperture of about 0.65 in consideration of a correlation, such as an optical distance, with the beam expander 32. Here, the numerical aperture of the objective lens 100, with regard to the reference beam Lb1, is greater than the numerical aperture of the objective lens 100 with regard to the signal beam Lb2 because the reference beam Lb1 is condensed through the objective lens 100 and is directly focused at the first focus position Fb, while the signal beam Lb2 is condensed through the objective lens 100, is reflected on the transflective film 12 of the optical disk 10, and is focused at the first focus position Fb, such that a focal length of the signal beam Lb2 is greater than the focal length of the reference beam Lb1. However, the description above, wherein the reference beam Lb1 is directly focused at the first focus position Fb and the signal beam Lb2 is focused at the first focus position Fb after being reflected on the transflective film 12 is exemplary and aspects of the present invention are not limited thereto.

In the recording mode, very few components of the reference beam Lb1 return to the objective lens 100 by being reflected on the transflective film 12 of the optical disk 10. Since the transflective film 12 including a cholesteric liquid crystal layer mainly reflects only clockwise circularly polarized components, the reference beam Lb1, which is a counterclockwise circularly polarized beam and is incident on the optical disk 10, is hardly reflected on the transflective film 12.

In the reproduction mode, the active HWP 26 is turned off so as not to function as an HWP, the blue beam Lb, which is a P-polarized beam and is transmitted from the second light source 21, is transmitted through the active HWP 26 without being changed, is transmitted through the polarization beam splitter 27, and proceeds along the proceeding path of the reference beam Lb1 in the recording mode. Thus, since a blue beam to be used in the reproduction mode is identical to the reference beam Lb1 in the recording mode, the following description assumes that the blue beam in the reproduction mode is the reference beam Lb1.

When the recording mark (hologram) recorded into the optical data storage layer 13 of the optical disk 10 is reproduced, a reference beam that is obtained by reproducing the hologram (hereinafter, this reference beam is referred to as a reproduction beam) is incident on the objective lens 100. The reference beam Lb1 is incident on the objective lens 100 in a counterclockwise circularly polarized beam state. As per the reproduction beam that is reflected on the hologram, only a beam proceeding direction is changed and a rotation direction of an electric field is not changed, and thus, the reproduction beam is regarded as a clockwise circularly polarized beam. The reproduction beam that is a clockwise circularly polarized beam is converted into an S-polarized beam through the QWP 43, reflected on the mirror 42, reflected on the dichroic prism 41, reflected on the mirror 45, and is incident on the active HWP 46. In the reproduction mode, since electricity is not applied to the active HWP 46 and thus the active HWP 46 does not function as an HWP, the reproduction beam, which is an S-polarized beam, is transmitted through the active HWP 46 without being polarized, reflected on the polarized beam splitter 38, and is incident on the relay lens 35. The reproduction beam, which is an S-polarized beam transmitted through the relay lens 35, is converted into a parallel beam through the beam expander 32, converted into a P-polarized beam through the HWP 31, and transmitted through the polarized beam splitter 28. The reproduction beam, which is a P-polarized beam transmitted through the polarized beam splitter 28, is condensed through the condensing lens 49, transmitted through the cylindrical lens 47, and received by the second photodetector 48. Data on the recording mark that is recorded into a predetermined recording layer may be obtained from a reproduction beam signal that is detected by the second photodetector 48.

Data is recorded into the above described data recording and/or reproducing apparatus illustrated in FIG. 4, according to an embodiment of the present invention, as described below.

The servo optical system 70 projects the servo beam Lr1 on the optical disk 10, performs focusing and tracking control on the objective lens 100 based on a detection result of the reflection servo beam Lr2 that is reflected on the reflective film 11, and positions the focus of the servo beam Lr1 on a target track.

The signal beam optical system 50 projects the signal beam Lb2 that is a blue beam, onto the optical disk 10 and positions the focus of the signal beam Lb2 on the target track by using the objective lens 100 of which position is controllable. Then, the focus of the signal beam Lb2 is positioned at the first focus position Fb by adjusting positions of the beam expander 58 and the movable lens 59 corresponding to a target depth corresponding to the first focus position Fb.

The reference beam optical system 20 projects the reference beam Lb1 onto the optical disk 10, adjusts positions of the beam expander 32 and the movable lens 33, controls the shutter 39 so as to transmit the reference beam Lb1, and positions the reference beam Lb1 at the first focus position Fb.

Here, the control of the recording power of the second light source 21 is performed by detecting a beam received by a front photodetector 25. A portion of a beam projected from the second light source 21 is divided through a beam splitter 23, condensed through a condensing lens 24, and received by the front photodetector 25.

Due to bias and eccentricity of the optical disk 10, a mismatch of the focus of the signal beam Lb2 with regard to the first focus position Fb may occur. For this reason, tangential, tracking, and focusing control is performed on the Galvano mirrors 51 and 56, the beam expander 58, and the movable lens 60 based on a detection result of the reflection signal beam Lb4.

As such, while the foci of the reference beam Lb1 and the signal beam Lb2 are located at the first focus position Fb, the difference between the optical path lengths of the reference beam Lb1 and the signal beam Lb2 is adjusted to be less than the coherence distance by moving the mirror 30. Then, the hologram may be appropriately recorded as the recording mark.

When the target depth is adjusted in order to record data into a plurality of recording layers, the method described above with reference to FIG. 3 is performed. In more detail, when a recording layer is changed from the first focus position Fb to a second focus position Fb', focus movers of the reference beam optical system 20 and the signal beam optical system 50 operate together so as to respectively move the foci of the reference beam Lb1 and the signal beam Lb2. The foci of the reference beam Lb1 and the signal beam Lb2 move to the second focus position Fb' and then, the hologram may be appropriately recorded as the recording mark by adjusting the difference between the optical path lengths of the reference beam Lb1 and the signal beam Lb2 to be less than the coherence distance by moving the mirror 30.

Data is reproduced from the above described data recording and/or reproducing apparatus illustrated in FIG. 4, according to an embodiment of the present invention, as described below.

The servo optical system 70 projects the servo beam Lr1 onto the optical disk 10, performs focusing and tracking control on the objective lens 100 based on a detection result of the reflection servo beam Lr2 that is reflected on the reflective film 11, and positions the focus of the servo beam Lr1 on a target track.

The reference beam optical system 20 projects the reference beam Lb1 onto the optical disk 10. The focus of the reference beam Lb1 is positioned on a target track through the objective lens 100 of which position is controllable. Also, the movable lens 33 performs coarse focus adjustment and the movable lens 34 performs fine focus adjustment, thereby controlling the focus of the reference beam Lb1 to be at the first focus position Fb.

In the reproduction mode, since electricity is not applied to the active HWP 26 and thus the active HWP 26 does not function as an HWP, all or most components of the blue beam Lb that is projected from the second light source 21 are used as the reference beam Lb1 and thus a reproduction efficiency may be improved. The reference beam Lb1 is transmitted by the control of the shutter 39.

The reference beam Lb1 is projected onto the hologram that is the recording mark, a reproduction beam is generated from the hologram, and the second photodetector 48 detects the reproduction beam so as to obtain a reproduction signal. Here, if electricity is not applied to the active HWP 46 and thus the active HWP 46 does not function as an HWP, a beam reception efficiency of the reproduction beam may be improved.

Although a few embodiments of the present invention have been shown and described, it would be appreciated by those skilled in the art that changes may be made in this embodiment without departing from the principles and spirit of the invention, the scope of which is defined in the claims and their equivalents.

**Claims**

1. An apparatus for recording and/or reproducing data into and/or from an optical disk (10) comprising an optical data storage layer (13), the apparatus comprising:

   a reference beam optical system (20) adapted to form a focus of a reference beam Lb1 in the optical data storage layer and comprising an objective lens (100);
   a signal beam optical system (50) adapted to form a focus of a signal beam Lb2 in the optical data storage layer and also comprising the objective lens (100); and
   a servo optical system (70) adapted to project a servo beam Lr1 onto the optical disk, receiving a reflection servo beam Lr2 which is reflected on the optical disk, and performing focusing and tracking control on the objective lens (100),

   wherein the reference beam optical system (20) comprises a first focus mover adapted to move the focus of the reference beam,
   wherein the signal beam optical system (50) comprises a second focus mover adapted to move the focus of the signal beam, and
   wherein the apparatus is adapted to move a first focus position Fb, at which the foci of the reference beam Lb1 and the signal beam Lb2 are located, in a thickness direction of the optical data storage layer, which is a focusing direction, such that data can be recorded into a plurality of recording layers in the optical data storage layer (13).

2. The apparatus of claim 1, wherein, the apparatus is adapted to drive the first and second focus movers, in response to the first focus position Fb moving to a second focus position, such that the foci of the reference beam and the signal beam simultaneously move to the second focus position Fb'.

3. The apparatus of claim 2, wherein the apparatus further adapted to drive the first and second focus movers , in response to the first focus position Fb moving to the second focus position Fb', such that a focus error signal representing a mismatch between the foci of the reference beam and the signal beam is in a linear negative feedback state.

4. The apparatus of claim 3, wherein the apparatus is further adapted to continuously perform a servo operation of the servo optical system , in response to the first focus position moving to the second focus position.

5. The apparatus of any of the previous claims, comprising a first and a second Galvano mirror (51, 56) and a controller to perform tangential, tracking, and focusing control on the Galvano mirrors (51, 56) and on the second focus mover based on a detection result of a reflection signal beam Lb4.

6. The apparatus of any one of claims 1 to 4, further comprising a Galvano mirror (51) and a controller adapted to generate a tangential driving signal based on a tangential error signal, and to provide the tangential driving signal to the Galvano mirror 51, to control a tangential direction and a tracking direction which are perpendicular to the focusing direction, in order to prevent the first focus position from moving in a direction which is not the focusing direction.

7. The apparatus of any of the previous claims 1-4 or 6, further comprising a Galvano mirror (56) and a controller adapted to generate a tracking driving signal based on a tracking error signal, and to provide the tracking driving signal to the Galvano mirror (56) to perform tracking control on the Galvano mirror (56) in order to reduce the difference between the foci of the reference beam Lb1 and the signal beam Lb2 with regard to the tracking direction.

8. The apparatus of any one of claims 1 to 7, wherein the first focus mover is formed of first and second movable lenses (33, 34) which are driven along an optical axis.

9. The apparatus of claim 8, wherein one of the first and second movable lenses is adapted to perform coarse focus adjustment and the other of the first and second movable lenses to perform fine focus adjustment.

10. The apparatus of any one of claims 1 to 9, wherein the second focus mover is formed of first and second movable lenses (59, 60) which are driven along an optical axis.

11. The apparatus of claim 10, wherein one of the first and second movable lenses is adapted to perform coarse focus adjustment and the other of the first and second movable lenses to perform fine focus adjustment.

12. A method of recording and/or reproducing data into and/or from an optical disk (10) comprising an optical data storage layer (13), the method comprising:

forming foci of a reference beam Lb1 and a signal beam Lb2 in the optical data storage layer (13);
moving the foci of the reference beam and the signal beam so as to be located at a first focus position Fb, and recording data into a plurality of recording layers in the optical data storage layer by moving the first focus position Fb in a thickness direction of the optical data storage layer, which is a focusing direction.

13. The method of claim 12, wherein, in response to the first focus position Fb moving to a second focus position Fb' in the focusing direction, the foci of the reference beam and the signal beam simultaneously move to the second focus position.

14. The method of claim 13, wherein, in response to the first focus position Fb moving to the second focus position Fb' in the focusing direction, the foci of the reference beam and the signal beam move such that a focus error signal representing a mismatch between the foci of the reference beam and the signal beam is in a linear negative feedback state.

15. The method of claim 14, wherein, in response to the first focus position Fb moving to the second focus position Fb' in the focusing direction, a servo driving operation is continuously performed on an objective lens (100) for forming the foci of the reference beam Fb1 and the signal beam, with regard to the optical disk.

# FIG. 1

# FIG. 2

# FIG. 3

FIG. 4

# FIG. 5

EP 2 164 068 A2

FIG. 6

EP 2 164 068 A2

**FIG. 7**